# EUROPEAN PATENT APPLICATION

(11) **EP 0 859 386 A1**
(43) Date of publication of application: **19.08.1998**
(21) Application number: 97870022.7
(22) Date of filing: 17.02.1997
(51) Int. Cl.: H01G 9/20

(54) **Photovoltaic cell**

(71) Applicant: MONSANTO COMPANY, St. Louis, Missouri 63167 (US)
(72) Inventor: The designation of the inventor has not yet been filed
(74) Representative: Bosch, Henry

(57) **Abstract**

A regenerative photo-electrochemical cell mounted on a porous electronically insulating substrate (36) comprising on one side a current collector (32,33,34) consisting of a conductive porous material encapsulated by a dye-coated semi-conductor coating, said encapsulated substrate facing direct exposure to incident light and on the other side a conductive layer acting as counter electrode (37). The two electrodes are in ionic contact through the regenerative electrolyte (34). The cell is physically isolated from its environment by a non conductive transparent (31) cover and the material supporting or making up the counter electrode.

## Description

This invention relates to a regenerative photo-electrochemical cell comprising a substrate provided with current collector areas one of which can be represented by a conductive porous, possibly fibrous material, encapsulated with a dye-coated semi conductor layer, said encapsulated material facing direct exposure to incident light. The constituent of the porous conductive material can be selected from conventional conductive metals and non conductive materials including glass and a natural or synthetic mineral. The substrate can be represented by porous, possibly fibrous material.

The prior art relating to regenerative photovoltaïc cells is crowded and diverse and, among others, possessed of detailed and precise knowledge concerning physical phenomena which can play a role within the framework of light conversion cells. EP-A-0.333.641 describes photo-electrochemical cells having a polycrystalline metal oxide semi-conductor with a monomolecular chromophore layer in its surface region whereby the metal oxide semi-conductor surface has a roughness factor of greater than 20, preferably greater than 150. At least one of the electrodes of the '641 reference shall be transparent to the incidental light. The photo-electrochemical cell in accordance with this reference is of the dual substrate "sandwich-type" configuration having oppositely charged current collectors attached to distinct substrates. The semi-conductor collector is provided with sintered nano-cells, such as TiO₂. Kavan et al., J. of The Electrochemical Society, February 1996, pages 394-400, have reported that sintering can reduce the (BET) surface area of nanocrystalline TiO₂ and henceforth its photo-electrochemical conversion functionality. Péchy et al., J. Chem. Soc., Chem. Commun., 1995, pages 65-66, describe the preparation of phosphonated polypyridyl ligands which are reported to exhibit excellent charge-transfer sensitizer properties for nanocrystalline TiO₂ film application. These characteristics render the phosphonated polypyridyl ligands particularly attractive for application in molecular photovoltaïc devices.

Hanprasopwattana et al., Langmuir 1996, 12, 3173-3179, describe methods of uniformly distributing monolayer to multilayer films of titania on mono-disperse silica spheres. The titania coatings so deposited are amorphous. Heating to temperatures around 500°C is needed to convert the amorphous coating into polycrystalline TiO₂. Kay et al., The Journal of Physical Chemistry 1996, Vol. 98, pages 952-959, report on the mechanism of photosensitization of transparent TiO₂ electrodes with chlorophyll derivatives, particularly induced photocurrent phenomena. Grätzel et al., Current Science, Vol. 66, No. 10, 25 May 1994, describe properties and requirements of efficient dye-sensitized photoelectrochemical cells for direct conversion of visible light to current. The authors conclude that actual cell technology (at the date of the paper) is not sufficient and cannot lead to commercially viable executions. Grätzel, DOE/BES workshop organized by NREL February 5-8, 1996, Estes Park, CO, USA teaches that the price determining factor for photovoltaïc technology originates from the conducting glass. In this context reference is drawn to the "monolith" construction of German patent 44 16 247 which exemplifies the construction of a sandwich-type structure, namely a cell wherein the photo sensitive layer is located between the current conductors thus necessarily requiring at least one transparent electrode. McEvoy et al., Solar Energy Materials and Solar Cells 32 (1994) 221-227, summarize general principles and the historical development sequence concerning photovoltaïc technologies.

While significant efforts have been extended towards the development of photovoltaïc cell technology which can be used commercially, these efforts have not yielded commercially viable executions. Past approaches were almost quantitatively directed to sandwich-type structures which are known to be difficultly manufacturable, in part because of constraints inherent to producing effective conductor areas.

It is therefore a main object of this invention to make available photovoltaïc cells which can be manufactured economically and which are capable of efficiently converting incident light into electrical energy. It is another object of this invention to make available cell structures which do not require light transparent electrode arrangements and which can be manufactured economically and operated efficiently. It is still another object of this invention to provide photochemical cells or key components therefore which can be constructed on flexible materials.

This invention, in part, relates to a regenerative photovoltaïc cell comprising two current collector areas, which are in ionic contact through a electrolyte permeable, but separated by a porous electronically insulating substrate. One of the areas is made up of a conductive ion permeable porous, possibly fibrous woven or non woven material encapsulated by a dye coated semi-conductor functional layer, said semi-conductor layer facing direct exposure to incident light and being made of electronically-interconnected nano-cells that permit diffusion of electrolyte ions between the nano-cells, the other current collector area being physically separated by the electrolyte permeable electronically insulating material. The dye is capable of injecting electrons into the semi-conductor layer upon exposure to light having a wave-length in the range of from 300 nm to about 900 nm, more preferably from about 400 nm to about 700nm.

The conductive porous material encapsulated by the semi conductor functional layer can be substantially constituted of natural or synthetic mineral, glass, carbon, conductive metals such as silver, iron, chrome, nickel, copper, zinc, tin, oxides of these metals, doped oxides of these metals or mixtures thereof. It can have insulating material coated with a conductive material containing carbon, metals such as silver, iron, chrome, nickel, copper, zinc, tin, titanium, oxides of these metals, doped oxides of these metals or mixtures thereof. The composition of the material supporting the semi conductor functional layer shall withstand temperatures up to 500 °C, preferably 450 °C.

The electrolyte permeable electronically insulating substrate can be represented by porous, preferably fibrous woven or non woven materials. It can be made of glass, natural or synthetic mineral materials, natural or synthetic organic polymer including polyaramide, polyimide, polyester, polyether, polysulfone, polyketone, polyamide, polycarbonate, epoxide, polyurethane, silicone, polyolefin, halogenated polyolefin and combinations thereof. This component can withstand without significant alterations temperatures up to 120 °C.

The cathodic current collector can be represented by conductive paints and coatings, intrinsically conductive organic polymers, carbon or metals having established electrically conductive properties. Examples of suitable metals include tin, titanium, nickel, copper, steel, chrome, zinc, silver, platinum and comparable metals or metal alloys or combinations thereof well-known in the relevant domain. This layer shall be preferably made of a an impermeable configuration such as a foil with a view to provide the photovoltaic construction with a degree of mechanical and environmental protection towards for instance ingression of water vapor or evaporation of the solvent used in combination with the electrolyte. However, the layer may also be constituted by a conductive porous material prepared along same principles as for the area supporting the dye coated semi conductor functional layer. A separate sheet of impermeable material shall then be needed to provide mechanical and environmental protection to the photovoltaic construction. The counter electrode and its eventual protective sheet shall preferably withstand without significant alteration temperatures up to 120 °C.

The photovoltaïc cell execution of this invention is preferably and generally covered by a transparent protective layer, such as glass or an appropriate transparent polymer such as a polycarbonate, which layer is substantially impermeable to water, organic vapors and oxygen. It also enables to significantly restrict exposure of the chromophore dye to ultraviolet light. It should preferably withstand without significant alteration temperatures up to 120 °C.

The edges of the cell are carefully closed with preferably cross linkable sealants known in the art, such as silicone elastomers, for similar environmental protection. The sealant should preferably withstand temperatures up to 120 °C.

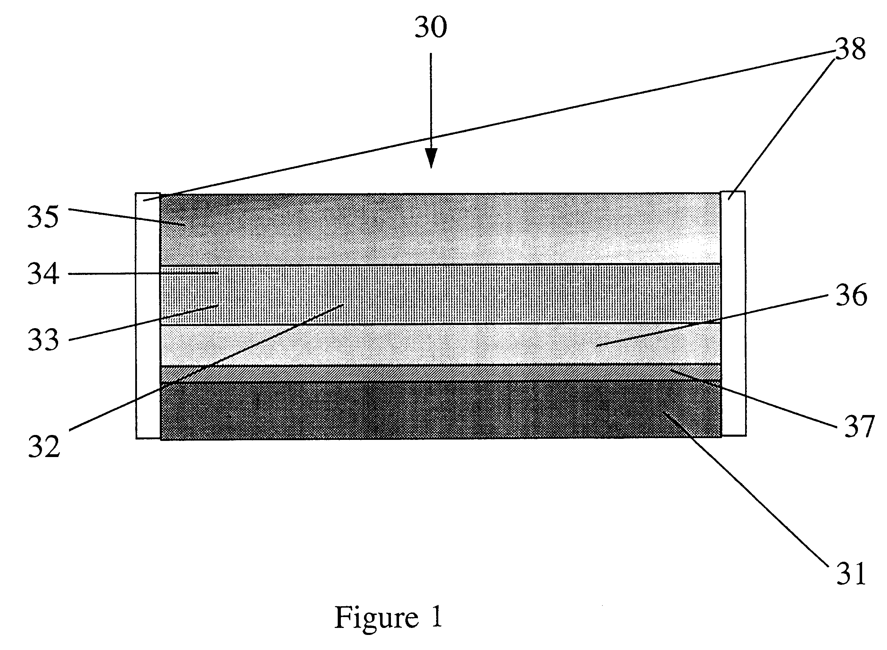

A cross-section of the photovoltaïc cell of present invention is represented in Fig. 1.

The two current collector areas are electronically insulated in relation to each other. One area is in contact with/covered by a dye coated semi-conductor functional layer comprising electronically-interconnected nano-cells. This functional layer faces direct exposure to incident light. The other conductive layer can be represented by conductive surfaces represented by paints, coated surfaces, carbon, polymers or (pure) metals having established electrically conductive properties. Examples of suitable metals include tin, titanium, nickel, copper, steel, chrome, zinc, silver, platinum and comparable metals or metal alloys or combinations thereof well-known in the relevant domain. It can also be constituted of conductive porous materials along the principles applied in the preparation of the fabric supporting the dye coated semi conductor functional area.

The dye coated semi-conductor functional layer collects the electrons/electricity generated upon exposure to incident light. The semi-conductor functional layer comprises a structure capable of exhibiting semi-conductor or quasi-semi-conductor properties. The layer can be represented by a dye coated metaloxide semi-conductor. The semi-conductor component which is preferably characterized by a polycrystalline structure can be selected from transition metal oxides of an element selected from the fourth, fifth or sixth group or sub-group of the periodic system of elements, in particular titanium, zirconium, hafnium, strontium, zinc, indium, tin, antimony, yttrium, lanthanum, vanadium, niobium, tantalum, chromium, molybdenum, tungsten, oxides of zinc, iron, nickel or silver, mixed oxides, and/or oxide mixtures of two or more of these metal oxides. In a preferred execution the semi-conductor layer comprises a polycrystalline TiO₂ layer deposited onto a conductive layer, with anatase being the predominant and preferred crystalline TiO₂ structure. The TiO₂ semi-conductor layer can be prepared in accordance with the SOL-GEL process (Stalder and Augustynski, J. Electrochem. Soc. 1979, 126, 2007) as applied in EP-A-0.333.641, page 2, lines 48-56.

The semi-conductor layer is coated with a chromophore dye. The coating is preferably a monomolecular layer. The chromophore dye releases photoexcited electrons under the influence of incident light. The electrons originated from the photoexcited dye are irreversibly injected into the semi-conductor functional lattice and are consequently separated spatially and by a potential barrier from the oxidized dye coating. The spectral sensitivity can vary depending, among others, upon the chemical structure of the dye. The selection of a suitable dye can henceforth be optimized to thereby take into considerations relevant light parameters with a view to enhance the conversion of light to electrical energy. Chromophore dyes which can be used in regenerative photovoltaïc cells are well known in the relevant domain. Suitable chromophore dyes can, for example, be represented by a transition metal complex of the type ruthenium tris(RuL₃), ruthenium bis(RuL₂), osmium tris(OsL₃), osmium bis(OsL₂) or ruthenium cis diaqua bipyridyl complex of the type RuL₂(H₂O)₂, such as ruthenium cis-diaqua bis(2,2'-bipyridyl-4,4')-dicarboxylate. The chromophore dye can be attached to the surface of the semi-conductor by chemisorbtion, adsorption or comparable techniques capable of yielding adequate and economically viable conversion of light to electrical energy. It has been established that good results can be obtained in the event the chromophore dye is attached to the metal oxide semi-conductor by means of carboxylic acid ligand. The chromophore dye layer can also be represented by metal complexes of phthalocyanin or porphyrin.

The semi-conductor functional layer is impregnated with an electrolyte solution. The electrolyte participates regeneratively in the charge transport by acting as an electron donator in relation to the chromophore dye to thus compensate for the loss of photo-excited electrons which have irreversibly entered the semi-conductor functional layer e.g. the titanium dioxide polycrystalline particles deposited onto the conductive layer. The electrolyte solution for use within the photovoltaïc cell herein can be represented by lithium iodide, bromide, hydroquinone and other comparable species which are well known in the relevant domain and have found application. The electrolyte is used in conjunction with a suitable solvent such as acetonitrile or similar organic nitriles and polynitriles. The electrolyte serves for the transport of electrical charges between the counter electrodes as for example described by Brian O'Regan et al., Nature, Vol. 353, pages 737-740.

Fig. 1 represents a cross-section of a photovoltaïc cell execution of this invention having current collector areas on either side of a porous electronically insulating substrate. The cell 30 comprises a protective layer 31 which is substantially impermeable towards water, organic vapors and oxygen. This layer can be represented by flexible or rigid executions of metal, mineral or organic polymeric materials such as galvanized steel, glass or polycarbonate.

The layer 32 comprises an anodic current collector area. It can be represented by a porous, possibly fibrous, woven or non woven material. Temperatures involved in the preparation of the semi conductor functional layer may go up to 500 C and materials capable of withstanding such temperatures are preferred. The porous material be can be represented by insulating material or conductive material or combinations thereof. Insulating material can be made for instance of a natural or synthetic mineral or of glass. The insulating porous material can be coated with a conductive material containing carbon, metals such as silver, iron, chrome, nickel, copper, zinc, tin, titanium, oxides of these metals, doped oxides of these metals or mixtures thereof. The conductive porous material can be represented by conductive materials including carbon, metals such as silver, iron, chrome, nickel, copper, zinc, tin, titanium, metal-alloys and combinations thereof all well-known in the relevant domain.. The conductive layer can also be constituted of randomly arranged conductive fibers in a on conductive porous matrix, with preferably a proportion of conductive fibers with a ratio of length over diameter in excess of 30 (aspect ratio). The volume of conductive fibers shall be more than one percent of the space occupied by the porous mass (100%), preferably from 2 to 10%. The aspect ratio of the conductive fiber is preferably greater than 100, the fiber diameter is usually greater than 5, preferably from 5 to 100 micrometers.

A dye coated semi-conductor functional layer 33 comprising nanoparticles, prepared via methods described in prior art such as controlled hydrolysis of alkoxides followed by a heat treatment and interconnected through a suitable sintering process at temperatures up to 500 °C. The chromophore dye is applied to the interconnected nanoparticles. While the semi-conductor component can be selected from a large variety of e.g. metal oxides, a polycrystalline titanium dioxide is a preferred execution. In another preferred aspect herein, a supplementary conductive layer substantially constituted of semi-conductor oxides or combinations thereof including, for example, oxides of tin, indium, antimony or fluor or combinations thereof, is deposited upon the thermally resistant material before the deposition of the dye coated semi conductor functional layer 33 according to preparation procedure also known in the art such as controlled hydrolysis of related alkoxides followed by heat treatment at temperatures up to 500 °C. This supplementary layer facilitates and enhances the electrical connection of the anode current collector and the semi-conductor layer. The external semi-conductor functional layer is coated with a chromophore dye, preferably in a monomolecular layer.

The regenerative oxido reduction couple electrolyte 34 which is respectively within the macroscopic and microscopic interstices/porosities of the porous materials and of the semi-conductor functional layer is preferably represented by lithium iodide dissolved in acetonitrile although other electrolyte and solvent species which have found application in comparable cell technology can also be used beneficially. The electrolyte solution has preferably a concentration in the range of from 1 molar to 10⁻⁴ molar, preferably from about 10⁻¹ molar to 10⁻³ molar.

A transparent protective layer 35 is deposited onto the semi-conductor functional/electrolyte impregnated layer. The transparent material can be represented by glass and a variety of polymeric materials which are substantially impermeable to water, organic vapors and oxygen and limit exposure of the dye to ultra violet light.

The counter electrode 37 is electronically isolated from the semi-conductor functional layer by means of ion-permeable insulating material such as a woven or non woven fabric, porous-, ceramic-, porcelain-, and/or polymeric coating material 36. The conductive material used in 37 can be selected independently from conductive materials suitable for use in layer 32. The counter electrode can also be executed by depositing conductive materials via conventional techniques well-known in the relevant domain on an appropriate substrate sheet. Examples of suitable metal deposition technologies include vacuum condensation, sputtering, electro-deposition, lamination, painting and combinations of such technologies. Minor quantities of oxido reduction catalysts such as platinum can also be beneficially applied on the surface of the electrode. Non-metallic conductive materials can be applied, depending upon the physical form of the conductive material and its coating properties. Metal and carbon paints can be applied by means of conventional techniques subject to optimized conditions. Increased temperatures e.g. up to 120 °C or even more can provide benefits. The non-metallic conductive material can broadly be represented by conductive coatings having preferably a conductivity of less than about 10 ohm/square. Such conductive materials can also be represented by a polymeric, intrinsically non-conductive matrix, containing a randomly dispersed minimal quantity, generally from about 1% to 15% of the volume expressed versus the matrix material (100%) of a high aspect ratio fibrous material, i.e. ratio of length over diameter, for example at least 10, generally more than 40, preferably more than 100, capable of conferring conductivity properties as may be required for application in the cell of this invention. The matrix material can be represented by polymer compounds including nylon, aramide, kevlar, polyesters, polycarbonates and more generally any polymeric mass adapted and compatible to minor levels of materials capable of conferring conductivity properties. Examples of the like materials are fibrous carbon, metals, metal wires, metal meshes and screens, metal chips and metal powders and similar structures of insulating material coated by a conductive metal layer.

The edges of the photovoltaic cell are closed by means of a sealant electrically insulating materials 38 in a known manner. The insulating material can be represented by known materials such as cross linkable natural or synthetic polymers, silicones or resins. The cured sealant shall be impermeable to water vapor, solvent vapor and oxygen.

The photovoltaïc cell herein can be useful for converting incident light into electrical energy. Generally visible light which can be converted has a wavelength in the range of from 300 nm to around 900 nm. Daylight having a wavelength in the range of from 400 nm to 700 nm is for obvious reasons a prime source of light. It is understood, however, that any particular cell in accordance with this invention can be routinely adapted and optimized to any predominant source of visible light in the range of from 300 nm to 900 nm or more generally to any light source the radiation energy of which can be converted beneficially into electrical energy.

## Claims

1. A regenerative photovoltaïc cell comprising current collector areas which are deposited onto a substrate, said areas being electronically insulated in relation to each other, one of the areas comprising a conductive porous material, said material being encapsulated with a dye-coated semi-conductor functional coating to thus yield electronically interconnected nanocells, said layer facing direct exposure to incident light, said current collector areas being insulated from each other by ion-permeable means, said current collector areas being in ionic electrical contact via an electrolyte medium.

2. The photovoltaïc cell in accordance with Claim 1 wherein the conductive porous material is selected from woven and non-woven species and wherein the conductive coating on said porous material is selected from metals, carbon, metal oxides, doped metal oxides and mixtures thereof.

3. The photovoltaïc cell in accordance with Claim 2 wherein the core of the conductive porous material is selected from a natural or synthetic mineral, glass, metal, carbon and mixtures thereof.

4. The photovoltaïc cell in accordance with Claim 3 wherein the conductive coating comprises a metal selected from silver, iron, chromium, nickel, copper, zinc, tin, titanium, oxides of these metals, doped oxides of these metals or mixtures thereof.

5. The photovoltaic cell in accordance with claim 3 wherein the core of the conductive porous material comprises a metal selected from silver, iron, chromium, nickel, copper, zinc, tin, titanium, oxides of these metals, doped oxides of these metals or mixtures thereof.

6. The photovoltaïc cell in accordance with Claim 4 wherein the conductive material is represented by any combination of tin, antimony and indium oxide.

7. The photovoltaïc cell in accordance with Claim 1 wherein the substrate layer is selected from glass, natural or synthetic mineral materials, natural organic polymers, synthetic organic polymers, polyaramide, polyimide, polyester, polyether, polyamide, polysulfone, polyketone, polycarbonate, epoxide, polyurethane, silicone, polyolefin, halogenated polyolefin and combinations thereof.

8. A regenerative photovoltaïc cell (30) comprising current collector areas (32) (37) which are electronically insulated in relation to each other by an ion-permeable insulating material (36), a dye-coated semi-conductor functional layer (33), said layer being impregnated with an electrolyte solution (34) which solution permeates insulating material (36) to contact collector (37), said cell being provided with protective layers (31) (35) which are substantially impermeable to water, organic vapors and oxygen, and with electrically insulating sealant means (38).
